Europäisches Patentamt

European Patent Office

Office européen des brevets

(19)

(11) Veröffentlichungsnummer: **0 038 490**
**B1**

(12)

# EUROPÄISCHE PATENTSCHRIFT

(45) Veröffentlichungstag der Patentschrift:
12.12.84

(51) Int. Cl.³: **F 24 D 3/00**, F 28 F 3/12,
F 24 J 3/02

(21) Anmeldenummer: 81102741.6

(22) Anmeldetag: 10.04.81

(54) Vorrichtung zur Übertragung von Wärme oder Kälte auf einen diese durchströmenden Träger.

(30) Priorität: 17.04.80 DE 3014731
17.10.80 DE 3039240
04.04.81 DE 3113641

(43) Veröffentlichungstag der Anmeldung:
28.10.81 Patentblatt 81/43

(45) Bekanntmachung des Hinweises auf die Patenterteilung:
12.12.84 Patentblatt 84/50

(84) Benannte Vertragsstaaten:
AT BE CH FR GB IT LI NL SE

(56) Entgegenhaltungen:
AU - A - 55 593
DE - A - 2 009 547
GB - A - 873 769
GB - A - 1 328 372
GB - A - 2 045 423

(73) Patentinhaber: Hölter, Heinz, Dipl.-Ing.,
Beisenstrasse 39-41, D-4390 Gladbeck (DE)

(72) Erfinder: Hölter, Heinz, Ing. grad., Beisenstrasse 39-41,
D-4390 Gladbeck (DE)
Erfinder: Gresch, Heinz, Ing. grad.,
Franz-Léhar-Strasse 25, D-4600 Dortmund-Wickede (DE)
Erfinder: Ingelbüscher, Heinrich, Ing. grad.,
Marcq-en-Baroeul-Strasse 60, D-4390 Gladbeck (DE)
Erfinder: Dewert, Heribert, Ing. grad.,
Bahnhofstrasse 23, D-4390 Gladbeck (DE)

(74) Vertreter: Spalthoff, Adolf, Dipl.-Ing.,
Pelmanstrasse 31 P.O. Box 34 02 20,
D-4300 Essen 1 (DE)

## Beschreibung

Die Erfindung betrifft eine Vorrichtung zur Übertragung von Wärme oder Kälte auf einen diese durchströmenden Träger, welche aus zwei aufeinander angeordneten, elastischen Lagen aus Kunststoff besteht, wobei wenigstens eine der Lagen auf ihrer der anderen Lage zugewandten Seite eine Vielzahl von Rippen zur Bildung von einander parallel verlaufenden Kanälen aufweist und die jeweils andere Lage mit den erhobenen Flächen der Rippen wenigstens bereichsweise verbunden ist, wobei die Kanäle mit einem Zulauf- und einem Ablaufkanal in Verbindung stehen. Durch diese Ausgestaltung kann aufgrund der Rippen einer oder beider Lagen auf die Anordnung einer für die Trägerflüssigkeit durchlässigen Zwischenschicht vollständig verzichtet werden. Dadurch ergibt sich nicht nur eine Vereinfachung in der Herstellung sondern auch im Aufbau der Vorrichtung.

Von diesem aus der AU-A-55 593/80, die am 25. 09. 80 veröffentlicht wurde, bekannten Stand der Technik ausgehend liegt der Erfindung die Aufgabe zugrunde, die Vorrichtung der eingangs genannten Art dahingehend zu verbessern, daß zur Erzielung eines möglichst guten Wirkungsgrades die Trägerflüssigkeit eine weitgehend gleichmäßige Verteilung über die gesamte Länge und Breite der Vorrichtung erfährt.

Erfindungsgemäß wird dies dadurch erreicht, daß der Zulaufkanal und der Ablaufkanal sich quer zu den von der Trägerflüssigkeit durchströmten Kanälen der Vorrichtung erstrecken und mit allen Kanälen verbunden sind und zwischen dem Zulaufkanal und dem Ablaufkanal zusätzlich ein oder mehrere Ausgleichskanäle angeordnet sind, welche ebenfalls mit allen Kanälen für die Trägerflüssigkeit verbunden sind und sich parallel zum Zulauf- und Ablaufkanal erstrecken. Auf diese Weise wird ein völliges Durchströmen der erfindungsgemäßen Vorrichtung gewährleistet, und zwar auch dann, wenn fast drucklos gearbeitet wird. Bei einer Schräglage der mattenartigen Vorrichtung, also bei einer Verwendung bei Schrägdächern oder auch nur leicht geneigten Dächern, wird die Trägerflüssigkeit immer den Weg des geringstens Widerstandes nehmen und nicht zu den höher gelegenen Kanälen hinfließen, es sei denn, es würde mit Druck gearbeitet, was jedoch einen zusätzlichen Aufwand darstellt. Durch die erfindungsgemäße Ausgestaltung wird über die Ausgleichskanäle eine Vergleichmäßigung der Trägerflüssigkeit auf sämtliche Längskanäle der Vorrichtung erreicht. Durch die gleichmäßige Verteilung ergibt sich eine erhebliche Steigerung der Wattleistung pro Quadratmeter.

Die Ausgleichskanäle weisen den gleichen Querschnitt auf wie die Zulauf- und Ablaufkanäle, so daß eine vollständig gleichmäßige Verteilung sichergestellt ist.

Je nach Kunststoffart und Wärme- bzw. Kältebelastung sind an gewünschten Stellen Zulauf- und Ablauföffnungen vorgesehen, die einen nicht erwünschten Überdruck zwischen den Lagen der Vorrichtung verhindern.

Vorteilhaft sind zum Zwecke der Zu- und Abführung der Trägerflüssigkeit an beliebiger gewünschter Stelle einseitige, querverlaufende Schälschlitze angebracht. Dadurch wird eine Zufuhr bzw. Abfuhr der Trägerflüssigkeit an beliebiger Stelle möglich, ohne daß die Weiterführung der bahnartigen Vorrichtung an ihren Enden behindert wird. Auf den Schälschlitzen sind vorzugsweise unter Verwendung von Übergangsprofilen Sammelrohre befestigt, welche der Zu- und Abführung der Trägerflüssigkeit dienen. Je nach Anbringung der Schälschlitze können die mattenartigen Vorrichtungen in zwei Richtungen mit der Trägerflüssigkeit beaufschlagt werden, welche über an den Enden angebrachte Sammelrohre ableitbar ist.

Vorteilhaft besteht die Vorrichtung aus einer aufrollbaren, dünnwandigen Bahn, deren Längskanäle an ihren Stirnseiten mit Querkanälen in Verbindung stehen, die in an den Stirnseiten der Bahn nicht befestigten Randprofilen vorhanden sind, wobei die Längs- und Querkanäle derart bemessen sind, daß eine gleichmäßige Durchströmung mit einem spezifischen Flüssigkeitsvolumen von kleiner als 1 l/m² erfolgt. Durch diese Ausgestaltung wird erreicht, daß die Bahn in beliebiger Länge entsprechend der vorliegenden Raumgröße von einem endlos hergestellten Band geschnitten werden kann und mehrere derartiger Bahnen zur entsprechend benötigten Breite zusammengesetzt werden können. Somit kann jede beliebige Raumgrundfläche mit einer Bodenmatte ausgelegt werden, ohne daß bauliche Maßnahmen an der Decken- und/oder Fußbodenkonstruktion erforderlich werden. Die so auf dem Boden ausgelegte Matte kann nachträglich in bekannter Weise durch einen Teppich- oder Fußbodenbelag abgedeckt werden. Durch die besondere Bemessung der Kanäle wird erreicht, daß das System mit einem Minimum an Trägerflüssigkeitsinhalt auskommt, so daß bei einer etwaigen Leckage nur eine vergleichsweise geringe Flüssigkeitsmenge austreten kann. Außerdem kann die Wärmekapazität des Heizsystems vernachlässigbar klein gehalten werden, so daß kurzfristiges Aufheizen bzw. Abkühlen möglich ist und damit auch eine effektive, schnell ansprechende Nachtabsenkung und Wiederaufheizung durchgeführt werden kann.

An den Längsseiten der Bahn befinden sich Vorsprünge, deren Höhen etwa der halben Höhe der Bahn entsprechen und um dieses Maß höhenversetzt zueinander angeordnet sind. Durch diese Ausgestaltung ist es möglich, benachbarte Bahnen mit ihren gegeneinander höhenversetzten Vorsprüngen zusammenzufügen und diese beispielsweise durch Schweißen, Kleben od. dgl. fest miteinander zu verbinden. Die Randprofile der aneinandergefügten Bahnen sind dicht miteinander verbunden, z. B. durch eine muffenartige Ausbildung, so daß sich eine einwandfrei dichte Verbindung ergibt.

Als Anschluß für den Zu- und Ablauf einer aus mehreren Bahnen bestehenden Matte können Fußboden- und/oder Deckenleisten dienen, die mit Längskanälen versehen sind.

Die erfindungsgemäße Vorrichtung eignet sich besonders zur Verwendung in Gebäuden zur Anbringung an Decken und/oder Fußböden und/oder Wänden.

Ausführungsbeispiele der Erfindung sind an Hand der Zeichnung näher erläutert, und zwar zeigt

Fig. 1 eine Draufsicht auf eine Lage einer ersten Ausführungsform der Vorrichtung,

Fig. 2 in schaubildlicher Darstellung eine aus zwei Lagen bestehende Vorrichtung nach Fig. 1,

Fig. 3 einen teilweisen Längsschnitt der Fig. 2,

Fig. 4 eine geschnittene Ansicht der Fig. 2, jedoch mit aufgesetzter Zu- oder Abführung,

Fig. 5 und 6 verschiedene Möglichkeiten der Zuführung oder Abführung der Trägerflüssigkeit,

Fig. 7 in schaubildlicher Darstellung eine weitere Ausführung einer Lage der Vorrichtung,

Fig. 8 eine Draufsicht mehrerer zu einer Matte zusammengefügter Vorrichtungen, und

Fig. 9 in schematischer Darstellung die Ecke eines Raumes mit verlegter Bodenmatte.

Die erfindungsgemäße Vorrichtung besteht aus zwei miteinander verbundenen Lagen 1, 2 aus einem elastischen Kunststoffmaterial. Wenigstens eine der Lagen 1 bzw. 2 weist auf ihrer der anderen Lage zugewandten Seite eine Vielzahl von Rippen 3 auf, welche zur Bildung von in Längsrichtung der Lagen 1 bzw. 2 verlaufenden Kanälen 4 dienen. Die jeweils andere Lage 1 bzw. 2 ist mit den erhobenen Flächen der Rippen 3 wenigstens bereichsweise verbunden. Die Kanäle 4 stehen mit einem Zulaufkanal 5 und einem Ablaufkanal 6 in Verbindung.

Der Zulaufkanal 5 und der Ablaufkanal 6 erstrecken sich quer zu den Kanälen 4 und sind mit allen Kanälen 4 verbunden. Zwischen dem Zulaufkanal 5 und dem Ablaufkanal 6 sind zusätzlich Ausgleichskanäle 7 angeordnet, welche ebenfalls mit allen Kanälen 4 verbunden sind und sich parallel zum Zulaufkanal 5 und zum Ablaufkanal 6 erstrecken. Die Ausgleichskanäle 7 dienen einer gleichmäßigen Verteilung und Strömung der Trägerflüssigkeit über sämtliche in der erfindungsgemäßen Vorrichtung vorhandenen Kanäle 4. Zur beliebigen Zufuhr und Abfuhr der Trägerflüssigkeit erhalten die Ausgleichskanäle 7 die gleichen Querschnitte wie die Zulaufkanäle 5 und die Ablaufkanäle 6. Dieser Maßnahme liegt die Überlegung zugrunde, daß eine nicht zu große geometrische Höhe eine Deformierung der aufeinandergeschweißten Lagen 1, 2 verursacht. Bei z. B. Wandelementen oder sehr steilen Dachneigungen wird die geometrische Höhe an der gewünschten Stelle durch das Abzapfen an einem entsprechenden Kanal ermöglicht. Auf diese Weise kann der Wärmebelastung und der Festigkeit des Materials der Lagen 1, 2 Rechnung gegen Überdruck getragen werden.

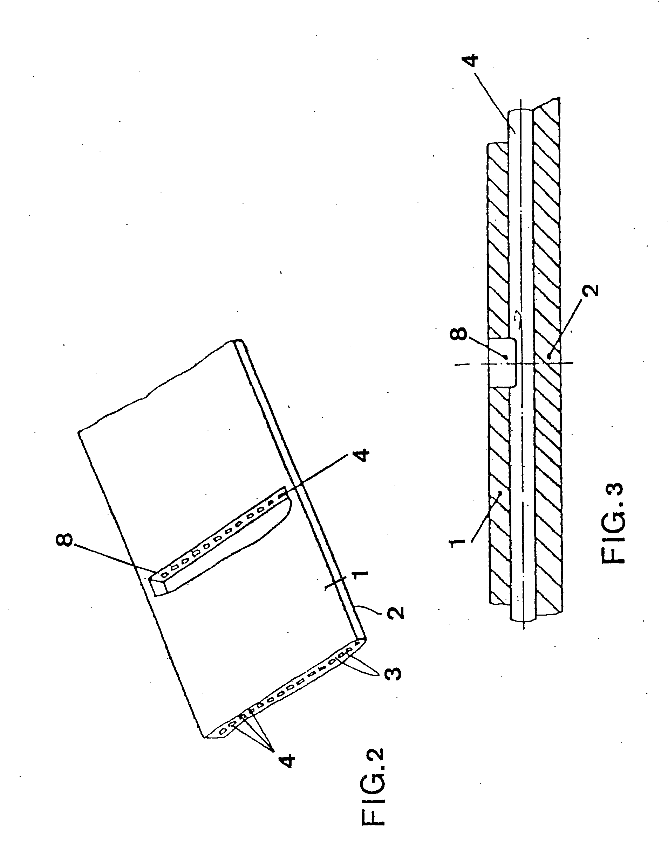

Wie insbesondere aus Fig. 2 ersichtlich, ist die erfindungsgemäße Vorrichtung in Form einer endlosen Bahn mit in Längsrichtung verlaufenden Kanälen 4 ausgeführt.

In der oberen Lage 1 ist zum Zwecke einer Einspeisung ein Schälschlitz 8 vorgesehen, der die obere Lage 1 vollständig durchdringt und quer zu den Längskanälen 4 verläuft. Die beiden Lagen 1, 2 sind profiliert und miteinander verschweißt, insbesondere an ihren einander zugeordneten Randbereichen, so daß sich ein in sich völlig dichtes Element ergibt. Die Schälschlitze 8 können an jeder gewünschten Stelle der Vorrichtung vorgesehen sein.

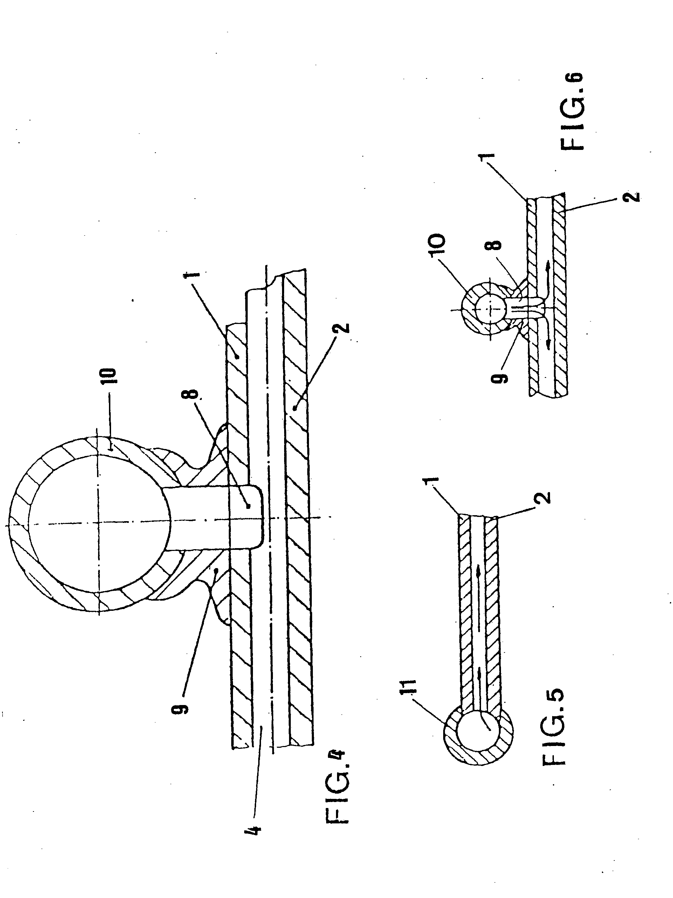

Bei der Ausführung nach Fig. 4 sind an den Schälschlitz 8 über das Übergangsprofil 9 Sammelrohre 10 angeschlossen. Diese können in herkömmlicher Weise, beispielsweise durch Klebung, Schweißung od. dgl., an der Oberseite der oberen Lage 1 bzw. des Übergangsprofils 9 befestigt sein.

Bei der Ausführung nach Fig. 5 erfolgt die Zu- bzw. Ableitung der Trägerflüssigkeit von den an den Rändern der Lagen 1 angebrachten Sammelrohre 11.

Bei der Ausführung nach Fig. 6 kann sich die zugeführte Trägerflüssigkeit über den Schälschlitz 8 nach beiden Seiten der Vorrichtung hin aufteilen, so daß gegenüber einer randseitigen Zuführung die doppelte Menge zugeführt werden kann. Außerdem wird der Übergang in Längsrichtung nicht durch die ansonsten vorhandenen Zu- oder Abflußrohre gestört.

Anstelle der Übergangsprofile 9 und der Sammelrohre 10 ist es auch möglich, auf der Ober- bzw. Unterseite der Lagen 1, 2 der Vorrichtung flachgeformte Rohre direkt über den Schälschlitzen 8 aufzuschweißen oder aufzukleben.

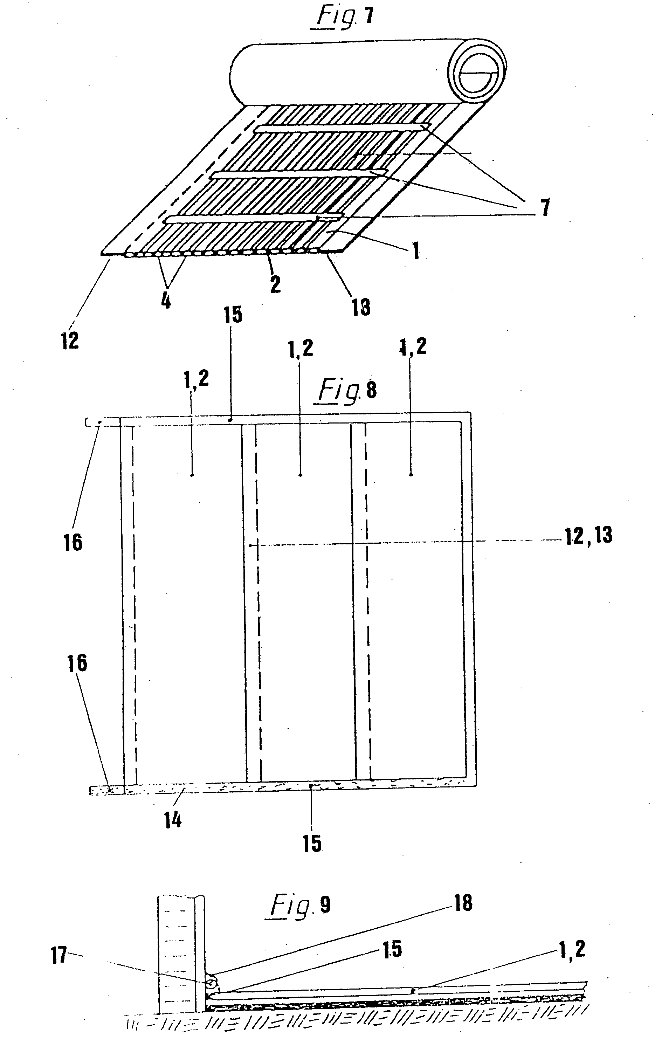

Bei der Ausführung nach Fig. 7—9 besteht die erfindungsgemäße Vorrichtung aus einer aufrollbaren, dünnwandigen Bahn, welche aus der oberen 1 und der unteren Lage 2 besteht, zwischen denen sich eine Vielzahl von in Längsrichtung verlaufenden Kanälen 4 befindet. Über die Länge der Bahn sind Ausgleichskanäle 6 vorgesehen, welche einen Druckausgleich und damit eine gleichmäßige Durchströmung der Bahn sicherstellen. An den Längsseiten der Bahn befinden sich Vorsprünge 12, 13, die jeweils etwa die halbe Höhe der Höhe der Bahn aufweisen und höhenversetzt zueinander angeordnet sind. Durch diese Ausgestaltung können die einzelnen Bahnen unter Überlappung der Vorsprünge 12, 13 benachbarter Bahnen zusammengefügt werden, und zwar durch Verschweißung, Verklebung od. dgl., wie aus Fig. 8 ersichtlich. Somit können je nach der vorhandenen Raumgröße beliebig große Matten gebildet werden, da die benötigten Längen lediglich von einer vorgefertigten aufgerollten Bahn auf Maß abgeschnitten werden müssen.

An den Stirnseiten der einzelnen miteinander verbundenen Bahnen stehen deren Längskanäle 4 mit Querkanälen 14 in Verbindung, die sich in Randprofilen 15 befinden, die dicht mit den Stirnseiten der einzelnen Bahnen verbunden sind. Die Querkanäle 14 in den Randprofilen 15 dienen der Zu- und Abfuhr für die die einzelnen Bahnen durchströmende Trägerflüssigkeit. Die Randprofile 15 können mit Anschlußstutzen 16 ausgerüstet sein, so daß diese dicht miteinander verbindbar sind. Es sind jedoch auch muffenartige Anschlüsse od. dgl. möglich.

Wie aus Fig. 9 ersichtlich, kann die Zu- und Abfuhr der Trägerflüssigkeit zu einer den Boden eines ganzen Raumes bedeckenden Matte aus einzelnen Bahnen über Kanäle 17 erfolgen, die sich in den Fußbodenleisten 18 befinden und mit den Querkanälen 14 in den Randprofilen 15 in Verbindung stehen.

Die Bemessung der Kanäle 4 sowie der Ausgleichskanäle 7 der einzelnen Bahnen sowie der Querkanäle 14 der Randprofile 13 erfolgt derart, daß eine gleichmäßige Durchströmung mit einem minimalen spezifischen Flüssigkeitsvolumen erfolgt, so daß nur eine vergleichsweise geringe Menge an Trägerflüssigkeit pro Quadratmeter benötigt wird, um eine einwandfreie Kühl- bzw. Heizwirkung zu erreichen.

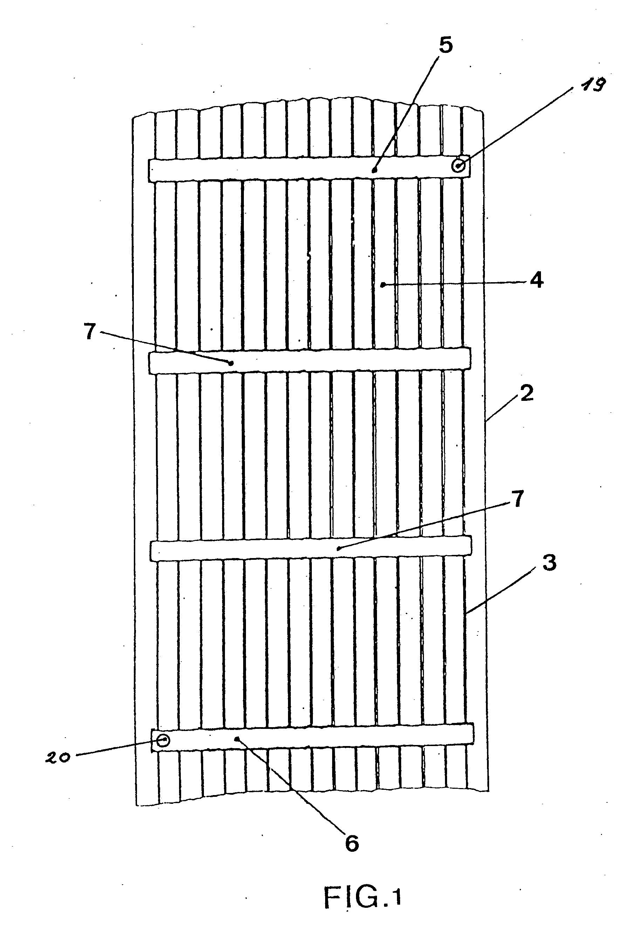

Wie aus Fig. 1 ersichtlich, ist die Zulauföffnung des Zulaufkanals 5 mit 19 und die Ablauföffnung 20 des Ablaufkanals mit 6 bezeichnet.

## Patentansprüche

1. Vorrichtung zur Übertragung von Wärme oder Kälte auf einen diese durchströmenden Träger, welcher aus zwei aufeinander angeordneten Lagen (1, 2) aus elastischem Kunststoff besteht, wobei wenigstens einer der Lagen (1 bzw. 2) auf ihrer der anderen Lage (2 bzw. 1) zugewandten Seite eine Vielzahl von Rippen (3) zur Bildung von einander parallel verlaufenden Kanälen (4) aufweist und die jeweils andere Lage (1 bzw. 2) mit den erhobenen Flächen der Rippen (3) wenigstens bereichsweise verbunden ist, wobei die Kanäle (4) mit einem Zulaufkanal (5) und einem Ablaufkanal (6) in Verbindung stehen, dadurch gekennzeichnet, daß der Zulaufkanal (5) und der Ablaufkanal (6) sich quer zu den Kanälen (4) erstrecken und mit allen Kanälen (4) verbunden sind und zwischen dem Zulaufkanal (5) und dem Ablaufkanal (6) zusätzlich ein oder mehrere Ausgleichskanäle (7) angeordnet sind, welche ebenfalls mit allen Kanälen (4) verbunden sind und sind und sich parallel zum Zulaufkanal (5) und zum Ablaufkanal (6) erstrecken.

2. Vorrichtung nach Anspruch 1, dadurch gekennzeichnet, daß die Ausgleichskanäle (7) den gleichen Querschnitt wie die Zu- (5) und die Ablaufkanäle (6) aufweisen.

3. Vorrichtung nach Anspruch 1 oder 2, dadurch gekennzeichnet, daß je nach Kunststoffart und Wärme- bzw. Kältebelastung an wunschgerechter Stelle Zulauföffnungen (19) und Ablauföffnungen (20) angesetzt sind, die einen nicht gewünschten Überdruck zwischen den Lagen (1, 2) verhindern.

4. Vorrichtung nach Anspruch 1 oder einem der vorhergehenden, dadurch gekennzeichnet, daß zum Zwecke der Zu- und Abführung der Trägerflüssigkeit an beliebiger gewünschter Stelle einseitige querverlaufende Schälschlitze (8) angebracht sind.

5. Vorrichtung nach Anspruch 1 oder einem der vorhergehenden, dadurch gekennzeichnet, daß auf den Schälschlitzen (8), vorzugsweise unter Verwendung von Übergangsprofilen (9), Sammelrohre (10) befestigt sind.

6. Vorrichtung nach Anspruch 1 oder einem der vorhergehenden, dadurch gekennzeichnet daß diese über den Schälschlitz (8) in zwei Richtungen mit der Trägerflüssigkeit beaufschlagt ist, welche über an den Enden angebrachte Sammelrohre (11) ableitbar ist.

7. Vorrichtung nach Anspruch 1 oder einem der vorhergehenden, dadurch gekennzeichnet, daß diese aus einer aufrollbaren, dünnwandigen Bahn besteht, deren Längskanäle (4) mit Querkanälen (14) in Verbindung stehen, die in an den Stirnseiten der Bahn dicht befestigten Randprofilen (15) vorhanden sind, wobei die Längs- (4) und Ausgleichskanäle (7) derart bemessen sind, daß eine gleichmäßige Durchströmung mit einem spezifischen Flüssigkeitsvolumen von kleiner als 1 l/m² erfolgt.

8. Vorrichtung nach Anspruch 1 oder einem der vorhergehenden, dadurch gekennzeichnet, daß sich an den Längsseiten der Bahn Vorsprünge (12, 13) befinden, deren Höhen etwa der halben Höhe der Bahn entsprechen und um dieses Maß höhenversetzt zueinander angeordnet sind

9. Vorrichtung nach Anspruch 1 oder einem der vorhergehenden, dadurch gekennzeichnet, daß die Randprofile (15) aneinandergefügter, eine Matte bildender Bahnen dicht miteinander verbunden sind.

10. Vorrichtung nach Anspruch 1 oder einem der vorhergehenden, dadurch gekennzeichnet, daß als Anschluß für die Zu- und Abfuhr der Trägerflüssigkeit einer aus mehreren Bahnen bestehenden Matte Fußboden- (18) und/oder Deckenleisten dienen, die mit Längskanälen (4) versehen sind.

## Claims

1. Device for transmitting heat or cold to a carrier passing through the said device, the carrier consisting of two superposed layers (1, 2) of elastic synthetic plastics material, at least one of the layers (1 or 2) having on its side which is toward the other layer (2 or 1) a plurality of ribs (3) to form passages (4) which extend parallel with one another, whichever is the other layer (1 or 2) being at least zone-wise connected to the raised faces of the ribs (3), the passages (4) communicating with a feed passage (5) and a discharge passage (6), characterized in that the feed passage (5) and the discharge passage (6) extend transversely of the passage (4) and are connected to all passages (4) and in that there are disposed between the feed passage (5) and the discharge passage (6) additionally one or a plurality of compensating passages (7) which are likewise connected to all passages (4) and extend parallel with the feed passage (5) and the discharge passage (6).

2. Device according to claim 1, characterised in that the compensating passages (7) have the same cross-section as the feed passages (5) and discharge passages (6).

3. Device according to claim 1 or 2, characterised in that according to the type of synthetic plastics material involved and the heat or cold loading, so feed apertures (19) and discharge orifices (20) are applied where appropriate in order to prevent an undesirable overpressure between the layers (1, 2).

4. Device according to claim 1 or one of the preceding claims, characterised in that for the purpose of feed and discharge of carrier fluid, unilateral transversely extending slots (8) are provided at any desired location.

5. Device according to claim 1 or one of the preceding claims, characterised in that collecting tubes or headers (10) are mounted on the recesses (8), preferably through transition profiles (9).

6. Device according to claim 1 or one of the preceding claims, characterised in that the said device is exposed to carrier fluid in two directions through the slot (8), the carrier fluid being capable of being discharged through tubes or headers (11) mounted at the ends.

7. Device according to claim 1 or one of the preceding claims, characterised in that it consists of a thin-walled web which can be rolled up and in which the longitudinal passages (4) communicate with transverse passages (14) which are provided in marginal profiles (15) fitted tightly on the ends of the web, the dimensions of the longitudinal (4) and compensating (7) passages being such that there is an even throughflow with a specific volume of fluid of less than 1 l/sq.m.

8. Device according to claim 1 or one of the preceding claims, characterised in that there are on the long sides of the web projections (12, 13), the heights of which correspond substantially to half the height of the web and are disposed so that their heights are staggered by this amount in respect of one another.

9. Device according to claim 1 or one of the preceding claims, characterised in that the marginal profile (15) of interconnected webs which form a mat are connected tightly to one another.

10. Device according to claims 1 or one of the preceding claims, characterised in that serving as a connection for the feed and discharge of carrier fluid of a mat consisting of a plurality of webs are floor (18) and/or ceiling strips which are provided with longitudinal passages.

## Revendications

1. Dispositif de transmission de chaleur ou de froid à un fluide porteur s'écoulant à travers eux, lequel se compose de deux couches (1, 2) en matière plastique élastique superposées dont l'une (1 ou 2) comporte sur sa face tournée vers l'autre (2 ou 1) un certain nombre de nervures (3) pour former des canaux (4) parallèles entre eux et dont l'autre (2 ou 1) est reliée, au moins par zones, aux surfaces saillantes desdites nervures (3), les canaux (4) étant reliés à un canal d'entrée (5) et à un canal de sortie (6), dispositif caractérisé par le fait que le canal d'entrée (5) et le canal de sortie (6) s'étendent parallèlement aux canaux (4) et sont reliés à eux tous et qu'un ou plusieurs canaux d'équilibrage (7), également reliés à tous les canaux (4) et parallèles au canal d'entrée (5) et au canal de sortie (6), sont disposés en plus entre le canal d'entrée (5) et le canal de sortie (6).

2. Dispositif selon la revendication 1 caractérisé par le fait que les canaux d'équilibrage (7) présentent la même section que les canaux d'entrée (5) et de sortie (6).

3. Dispositif selon la revendication 1 ou 2, caractérisé par le fait que, selon le genre de matière plastique et la charge de chaleur ou de froid, des ouvertures d'entrée (19) et des ouvertures de sortie (20) qui empêchent une surpression indésirable entre les couches (1, 2) sont établies en emplacement souhaitable.

4. Dispositif selon la revendication 1 ou une des précédentes caractérisé par le fait que des saignées unilatérales transversales sont établies, en vue de l'amenée et de l'évacuation du fluide porteur, en tout emplacement souhaitable.

5. Dispositif selon la revendication 1 ou une des précédentes caractérisé par le fait que des tubes collecteurs (10) sont fixés, de préférence sous utilisation de profilés de transition (9), sur les saignées (8).

6. Dispositif selon la revendication 1 ou une des précédentes caractérisé par le fait qu'à travers la saignée, il est alimenté dans deux directions en fluide porteur, celui-ci dérivable par des tubes collecteurs (11) fixés aux extrémités.

7. Dispositif selon la revendication 1 ou une des précédentes caractérisé par le fait qu'il se compose d'une bande enroulable à parois minces dont les canaux longitudinaux (4) sont reliés à des canaux transversaux (14) qui existent dans des profilés marginaux (15) fixés de façon étanche aux faces frontales de ladite bande, les canaux longitudinaux (4) et les canaux d'équilibrage (7) étant dimensionnés en sorte qu'il se produise un écoulement uniforme de volume spécifique de liquide inférieur à 1 l/m².

8. Dispositif selon la revendication 1 ou une des précédentes caractérisé par le fait qu'il se trouve, sur les côtes longitudinaux de la bande, des saillies dont la hauteur correspond à peu près à la moitié de celle de la bande et qui sont décalées l'une par rapport à l'autre en hauteur dans cette même mesure.

9. Dispositif selon la revendication 1 ou une des précédentes caractérisé par le fait que les profilés marginaux (15) de bandes juxtaposées formant un panneau sont reliés de façon étanche les uns aux autres.

10. Dispositif selon la revendication 1 ou une des précédentes caractérisé par le fait que des rampes de sol (18) et/ou de plafond munies de canaux longitudinaux (4) servent de raccordement pour l'amenée et l'évacuation du fluide porteur d'un panneau composé d'une ou de plusieurs bandes.

FIG.1

FIG.2

FIG.3

0 038 490

FIG.4

FIG.5

FIG.6

_Fig._ 7

_Fig._ 8

_Fig._ 9